# EUROPEAN PATENT APPLICATION

(11) **EP 1 001 576 A2**
(43) Date of publication of application: **17.05.2000**
(21) Application number: 99122400.7
(22) Date of filing: 10.11.1999
(51) Int. Cl.: H04L 12/56

(54) **Routing address search system**

(30) Priority: 12.11.1998 JP 33852198
(71) Applicant: NEC CORPORATION, Tokyo (JP)
(72) Inventor: Yamashita, Mikiharu, c/o NEC Corporation, Tokyo (JP); Ikeda, Hiroshi, c/o NEC Corporation, Tokyo (JP); Suzuki, Yuuichi, c/o NEC Corporation, Tokyo (JP)
(74) Representative: Glawe, Delfs, Moll & Partner

(57) **Abstract**

A routing address search system for finding destination address in routing processing comprises address information storing unit (110) provided with a plurality of tables in which each address information is stored for every type of received packets, and address search processing unit (111) for searching the corresponding table of said address information storing unit (110), according to the type of the packet and a search key extracted from header information of the packet, rewriting the header information of the packet according to the searched address information, and thereafter giving an instruction of sending the packet.

## Description

### BACKGROUNDS OF THE INVENTION

### FIELD OF THE INVENTION

The present invention relates to a routing address search system for finding destination address in routing processing, and more particularly to a routing address search system capable of finding each address for various types of packets at a high speed.

### DESCRIPTION OF THE RELATED ART

Generally, in the destination address search in IP routing or the like, target information can be obtained at the transfer destination best matching a search key. Conventional technique about the destination address search in routing is disclosed in, for example, Japanese Patent Publication Laid-Open (Kokai) No. Heisei 6-152655.

This "Route Relay Device" of Japanese Patent Publication Laid-Open No. 6-152655 is to improve the efficiency especially in the processing that needs to search an address table of network layers, in the network protocol processing and the network address control processing. It is provided with a table including a source address and a destination address as a search key, and whenever a packet to be routed occurs, the table is searched and according to the information, the packet is routed based on the previous search result.

Recently, in order to speed up the address search, there increases the case of performing the search itself by use of hardware search engine. A system of finding the destination address in the conventional IP routing or the like by use of hardware would generally process only a specific packet.

The address search by use of the above-mentioned conventional hardware search engine is defective in flexibility because the hardware processing thereof is specific to a packet type. For example, in the processing by use of hardware, the system is specialized for use in address search of only the protocol packet IPv4 if the protocol packet is IPv4, and it is not used for address search of another protocol packet. Although a specific protocol packet can be searched, it is impossible to search address at a high speed on the same network including various types of packets.

### SUMMARY OF THE INVENTION

An object of the present invention is to provide a routing address search system capable of routing packets at a high speed even over a network including various types of packets.

According to one aspect of the invention, a routing address search system for finding destination address in routing processing, comprises
address information storing means provided with a plurality of tables in which each address information is stored for every type of received packets, and
address search processing means for searching the corresponding table of the address information storing means, according to the type of a packet and a search key extracted from header information of the packet, rewriting the header information of the packet according to the searched address information, and thereafter giving an instruction of sending the packet.

In the preferred construction, the address search processing means comprises header extracting means for extracting a search key of address information from the header information of the packet, a plurality of search means for searching the address information, for every packet type, according to the type of the packet and the extracted search key, and header converting means for rewriting the header information of the packet according to the address information searched by the search means. In another preferred construction, the routing address search system further comprises a frame buffer for storing packets, a channel setting table for setting storing address on the frame buffer in which each packet and each packet type are stored, for every channel of the packets, packet receiving means for storing each received packet into each storing address of the frame buffer with reference to the channel setting table and sending the packet type and an address search instruction to the address search processing means, and packet sending means for sending packets according to the packet sending instruction from the address search processing means,
the address search processing means comprises header extracting means for extracting a search key of address information from the header information of the packet, a plurality of search means for searching the address information, for every packet type, according to the type of the packet and the extracted search key, and header converting means for rewriting the header information of the packet according to the address information searched by the search means. In another preferred construction, the routing address search system further comprises a frame buffer for storing packets, a channel setting table for setting storing address on the frame buffer in which packets are stored, for every channel of the packets, packet receiving means for storing each received packet into each storing address of the frame buffer with reference to the channel setting table and sending an address search instruction to the address search processing means, and packet sending means for sending packets according to the packet sending instruction from the address search processing means,
the address search processing means comprises header extracting means for extracting header information from the packet, packet type judging means for judging the packet type from the extracted header information of the packet and extracting a search key of the address information, a plurality of search means for searching the address information, for every packet type, according to the type of the packet and the extracted search key, and header converting means for rewriting the header information of the packet according to the address information searched by the search means.

In another preferred construction, the address search processing means is realized by hardware.

Also, the address information storing means is realized by a plurality of memories for storing the tables.

According to another aspect of the invention, a routing address search system for finding destination address in routing processing, comprises
an address information storing circuit provided with a plurality of tables in which each address information is stored for every type of received packets, and
an address search processing circuit for searching the corresponding table of the address information storing circuit, according to the type of a packet and a search key extracted from header information of the packet, rewriting the header information of the packet according to the searched address information, and thereafter giving an instruction of sending the packet.

In the preferred construction, the address search processing circuit comprises a header extracting circuit for extracting a search key of address information from the header information of the packet, a plurality of search circuits for searching the address information, for every packet type, according to the type of the packet and the extracted search key, and a header converting circuit for rewriting the header information of the packet according to the address information searched by the search circuit.

In another preferred construction, the routing address search system further comprises a frame buffer for storing packets, a channel setting table for setting storing address on the frame buffer in which each packet and each packet type are stored, for every channel of the packets, a packet receiving circuit for storing each received packet into each storing address of the frame buffer with reference to the channel setting table and sending the packet type and an address search instruction to the address search processing circuit, and a packet sending circuit for sending packets according to the packet sending instruction from the address search processing circuit.

In another preferred construction, the address search processing circuit comprises a header extracting circuit for extracting header information from the packet, a packet type judging circuit for judging the packet type from the extracted header information of the packet and extracting a search key of the address information, a plurality of search circuits for searching the address information, for every packet type, according to the type of the packet and the extracted search key, and a header converting circuit for rewriting the header information of the packet according to the address information searched by the search circuit.

In another preferred construction, the routing address search system further comprises a frame buffer for storing packets, a channel setting table for setting storing address on the frame buffer in which packets are stored, for every channel of the packets, a packet receiving circuit for storing each received packet into each storing address of the frame buffer with reference to the channel setting table and sending an address search instruction to the address search processing circuit, and a packet sending circuit for sending packets according to the packet sending instruction from the address search processing circuit.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing the whole structure of a routing address search system according to the form of a first embodiment of the present invention;
Fig. 2 is a block diagram showing the structure of an address search processing unit according to the form of the first embodiment of the present invention;
Fig. 3 is a flow chart showing the outline of an operation in the routing processing according to the routing address search system of the present invention;
Fig. 4 is a flow chart for use in describing the operation of the address search processing unit according to the form of the first embodiment of the present invention;
Fig. 5 is a block diagram showing the structure of an address search processing unit according to a second embodiment of the present invention.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

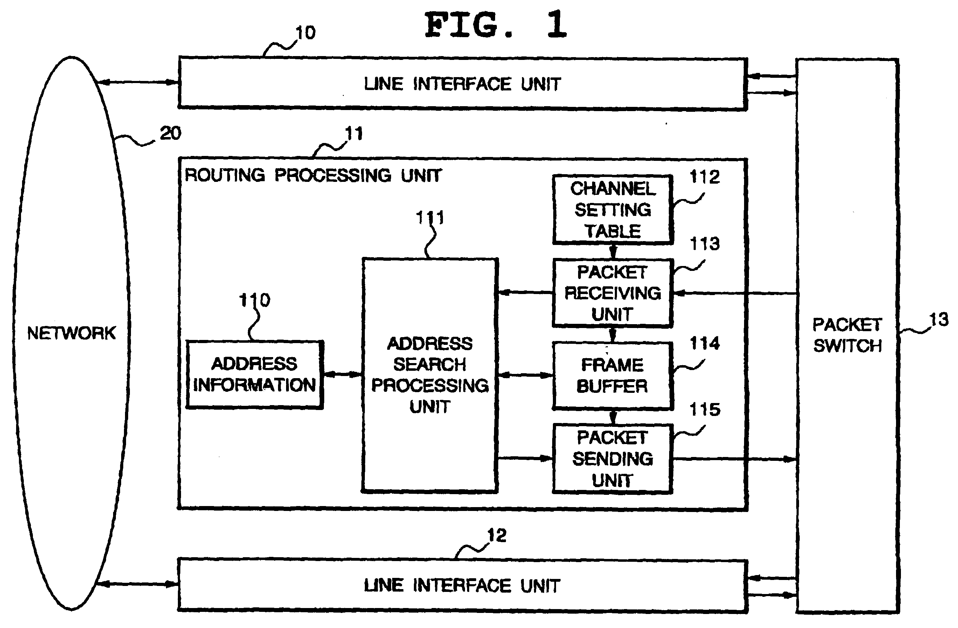

Fig. 1 is a block diagram showing the structure of a routing address search system according to the form of a first embodiment of the present invention. In this embodiment, the description is made in the case where the present invention is applied to a system of routing packets by use of a router.

The routing address search system comprises line interfaces 10 and 12 connected to a network 20, a routing processing unit 11 for routing packets, and a packet switch 13.

The line interfaces 10 and 12 respectively work as a terminal of a line for receiving and sending data from and to the network 20.

The routing processing unit 11 determines the routing destination of a packet entered after being switched by the packet switch 13 and supplies the packet to the packet switch 13 again after converting the head information of the packet.

The packet switch 13 performs switching operation according to a tag attached to a packet by the line interfaces 10 and 12.

The routing processing unit 11 includes an address information storing unit 110, an address search processing unit 111 that is an address search engine, a channel setting table 112, a packet receiving unit 113, a frame buffer 114, and a packet sending unit 115.

The address information storing unit 110 is a memory for storing address information indicating the routing destination of a packet, specifically storing the address information for every type.

The address search processing unit 111 searches address from the address information depending on a packet type.

The channel setting table 112 is a setting table for every channel identified by a tag attached by the line interfaces 10 and 12, consisting of a memory. A channel and a packet type have been correspondingly stored in the channel setting table 112 for every channel. Concretely, a flag indicating a packet type and the address of an area of the frame buffer 114 storing the packet have been set therein for every channel.

The packet receiving unit 113 stores an input packet into the frame buffer 114 and sends an address search instruction to the address search processing unit 111 together with a flag indicating a packet type after finishing storing.

The frame buffer 114 consists of a memory, to store received and sent packets. The address of an area of the frame buffer 114 storing a packet has been set in the above-mentioned channel setting table 112.

The packet sending unit 115 reads out the packet from the frame buffer 114 to send it to the packet switch 13 upon receipt of the packet sending instruction from the address search processing unit 111.

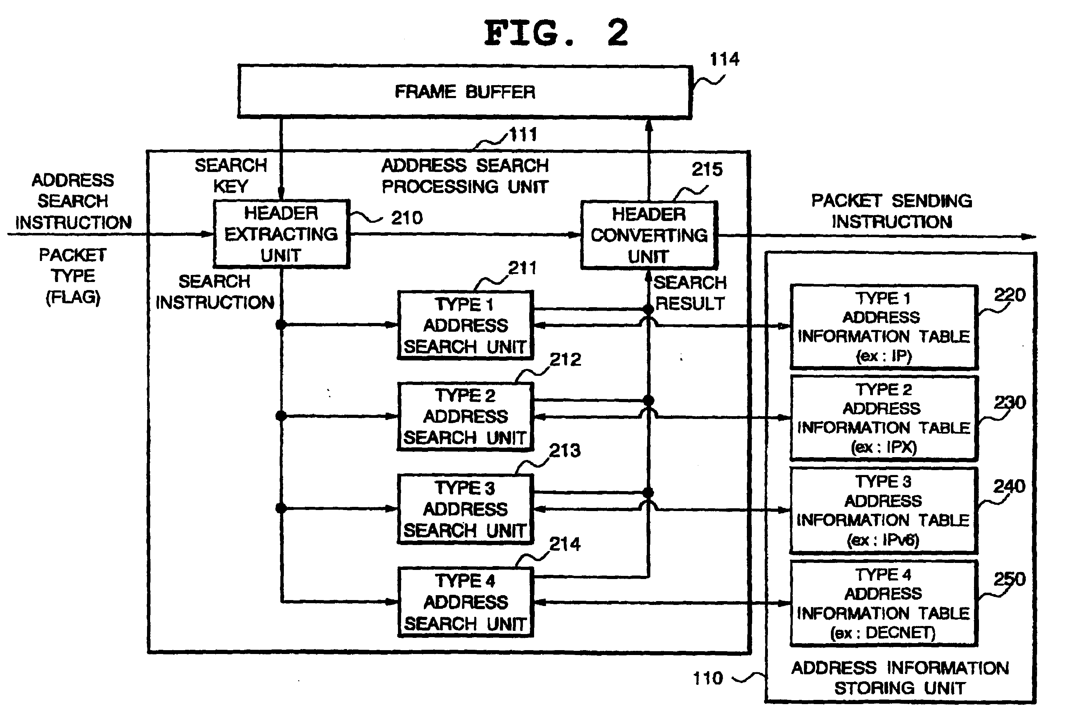

The structure of the address search processing unit 111 is shown in Fig. 2. The address search processing unit 111 finding address depending on a packet type includes a header extracting unit 210, a plurality of address search units 211 to 214 for every packet type, and a header converting unit 215, as shown in Fig. 2.

The header extracting unit 210 extracts a search key from the header area depending on a packet type.

A plurality of address information tables 220 to 250 consisting of the respective memories for every packet type are stored in the address information storing unit 110 storing the address information indicating the routing destination of each packet to be searched by the address search units 211 to 214.

In the example of Fig. 2, the packet type to be searched by the address search unit 211 is "IP", and the address information thereof is stored in the address information table 220. The packet type to be searched by the address search unit 212 is "IPX", and the address information thereof is stored in the address information table 230. The packet type to be searched by the address search unit 213 is "IPv6", and the address information thereof is stored in the address information table 240. The packet type to be searched by the address search unit 213 is "DECNET", and the address information thereof is stored in the address information table 250.

The header converting unit 215 rewrites the header on the frame buffer 114 based on the search result by the address search units 211 to 214, and gives an instruction of sending the packet to the packet sending unit 115.

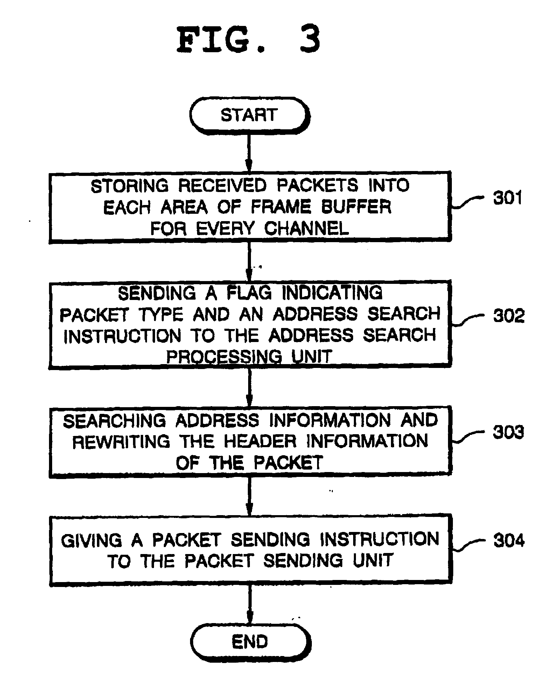

The operation of the embodiment constituted as mentioned above will be described. The outline of the operation in the routing processing will be described according to the flow chart of Fig. 3.

In Fig. 1, a packet received by the line interface 10 is switched by the packet switch 13 and supplied to the packet receiving unit 113 of the routing processing unit 11.

The routing processing unit 11 stores the packet into a specified area of the frame buffer 114, with reference to the channel setting table 112 set for every channel according to the channel of each packet entered into the packet receiving unit 113 (Step 301).

After finishing storing the packet into the frame buffer 114, a search instruction of the address information is given to the address search processing unit 111 together with the flag depending on the packet type set on the channel setting table 112 (Step 302). The search instruction of the address information includes the area address of the frame buffer 114 in which the packet is stored.

The address information in the address information storing unit 110 is searched and the header information of the packet in the frame buffer 114 is rewritten by the address search processing unit 111 (Step 303).

After finishing the search and rewriting of the header information, the search result is sent to the packet sending unit 115 together with the sending instruction (Step 304). According to the search result, the packet is supplied by the packet sending unit 115, thereby completing a series of processing.

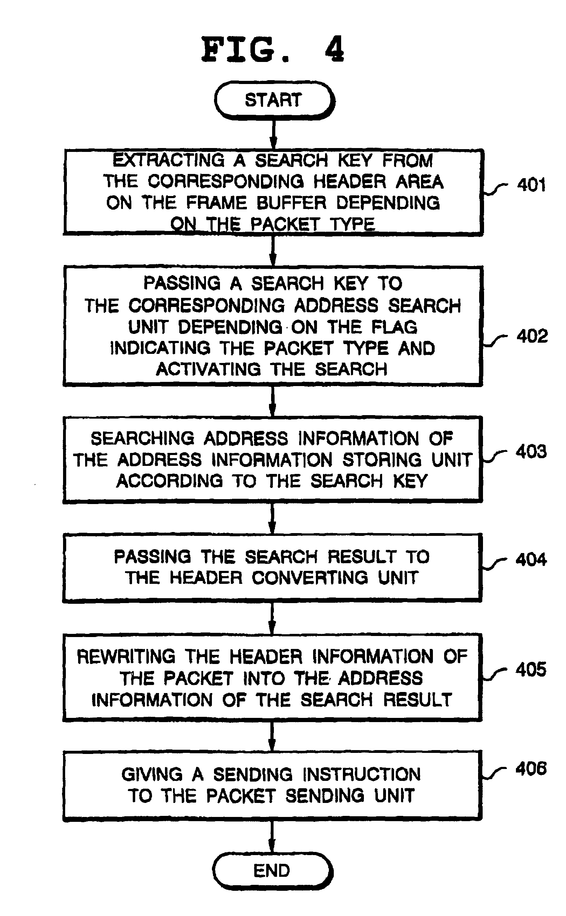

The details of the operation by the address search processing unit 111 will be described with reference to the flow chart of Fig. 4.

In Fig. 2, upon receipt of the address search instruction and the flag indicating the packet type from the packet receiving unit 113, the header extracting unit 210 extracts a search key from the header area of the frame buffer 114 depending on the packet type (Step 401), and passes the search key to one of the address search units 211 to 214 depending on the flag indicating the packet type, so to start the search (Step 402). For example, when the packet type is "IP", the destination address IP that is written on the header of the packet is extracted as the search key.

According to the handed search key, the address search unit 211, ···, or 214 searches the corresponding address information table 220, ···, or 250 constituted on the address information storing unit 110 according to the handed search key (Step 403).

After finishing the search, the search result is handed to the header converting unit 215 (Step 404). For example, when the packet type is "IP", the address search unit 211 is activated so to search the address information table 220, in the example of Fig. 2.

The header converting unit 215 converts the header information of the packet on the frame buffer 114 into the address information of the search result (Step 405), and the sending instruction is given to the packet sending unit 115, thereby to supply the packet (Step 406).

As for the address information stored in the address information storing unit 110, it is possible to store the address information of various types in a memory. As an algorithm for use in address search, the Patricia tree algorithm suitable for hardware search can be taken up. However, it is not necessarily restricted to the Patricia tree, but the binary search tree, hashing, CAM, or the like is available.

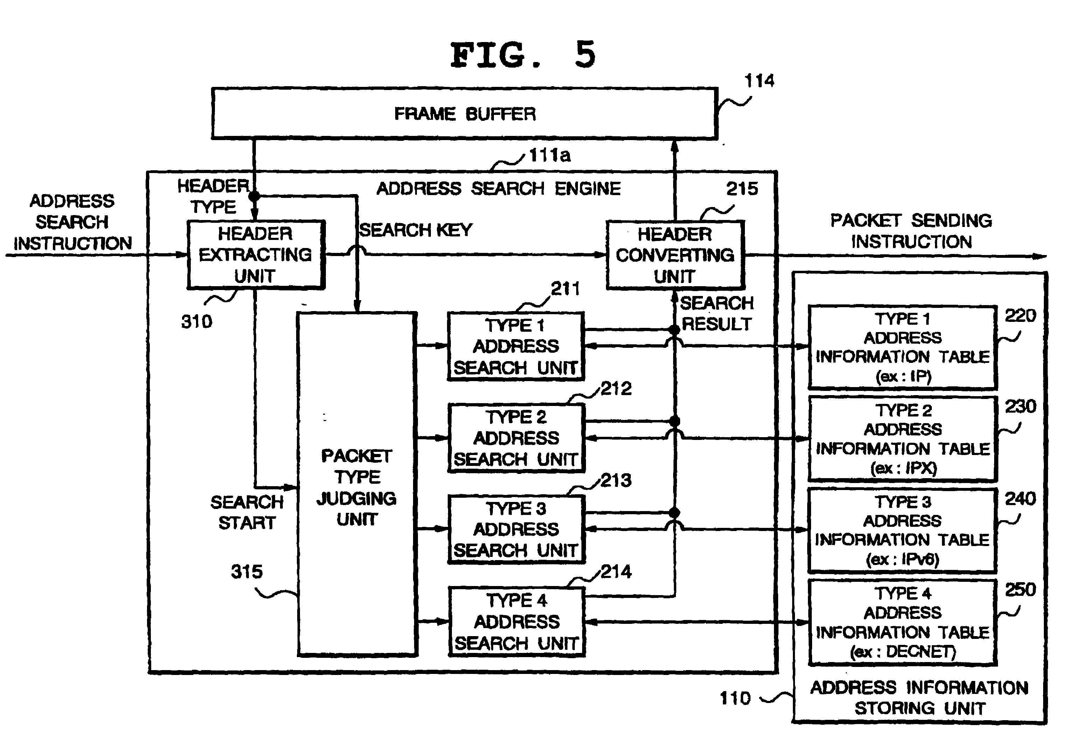

The structure of an address search processing unit of an address search system according to the form of a second embodiment of the present invention is shown in Fig. 5.

The address search processing unit 111a shown in Fig. 5 is constituted in that the address search processing unit in Fig. 2 is expanded to classify the search according to the automatic judgment of the packet type. This address search system according to the form of the second embodiment is effective in the case where the header information of a packet includes the information indicating the packet type. In Fig. 5, the same reference numerals are attached to the same components as those in Fig. 2, and the description thereof is omitted there.

Making a description of a difference between Fig. 2 and Fig. 5, it is only the address search instruction (including the area address search of the frame buffer 114) that is handed to the header extracting unit 310. Therefore, a flag indicating the packet type in the channel setting table 112 in Fig. 1 is not needed. The header extracting unit 310 extracts only the header type from the information for encapsulating a packet on the frame buffer 114 and hands the data to the packet type judging unit 316.

The packet type judging unit 316 makes a judgment of the packet type based on the header type, extracts the search key from the header area of the packet on the frame buffer 114 depending on the packet type, and thereafter activates the corresponding address search unit of 211 to 214.

The operation after the address search processing is the same as in the case of the first embodiment.

The present invention is not restricted to the form as mentioned above, but various modifications may be made within the spirit and scope of the invention.

In the above description, although address search is performed on the protocol packets "IP", "IPX", "IPv6", and "DECNET", by way of example, the present invention can be also applied to the address search of the protocol packet including "IP-ARP" of the Ethernet or/and "ATM-ARP" of the LANE.

As set forth hereinabove, according to the routing address search system of the present invention, a plurality of search tables depending on the packet types are built in a memory or memories, so to search a table depending on the packet type, thereby making it possible to search address by hardware flexibly even in case of including various types of packets. Therefore, it is possible to perform routing processing at a high speed even in the case where a network includes various types of packets.

## Claims

1. A routing address search system for finding destination address in routing processing, comprising:
address information storing means (110) provided with a plurality of tables in which each address information is stored for every type of received packets; and
address search processing means (111) for searching the corresponding table of said address information storing means (110), according to the type of a packet and a search key extracted from header information of the packet, rewriting the header information of the packet according to the searched address information, and thereafter giving an instruction of sending the packet.

2. A routing address search system as set forth in Claim 1, wherein
said address search processing means (111) comprising
header extracting means (210) for extracting a search key of address information from the header information of the packet,
a plurality of search means (211-214) for searching the address information, for every packet type, according to the type of the packet and the extracted search key, and
header converting means (215) for rewriting the header information of the packet according to the address information searched by said search means (211-214).

3. A routing address search system as set forth in Claim 1, further comprising
a frame buffer (114) for storing packets;
a channel setting table (112) for setting storing address on said frame buffer (114) in which each packet and each packet type are stored, for every channel of the packets,
packet receiving means (113) for storing each received packet into each storing address of said frame buffer (114) with reference to said channel setting table (112) and sending the packet type and an address search instruction to said address search processing means (111), and
packet sending means (115) for sending packets according to the packet sending instruction from said address search processing means (111).

4. A routing address search system as set forth in Claim 1, further comprising
a frame buffer (114) for storing packets,
a channel setting table (112) for setting storing address on said frame buffer (114) in which each packet and each packet type are stored, for every channel of the packets,
packet receiving means (113) for storing each received packet into each storing address of said frame buffer (114) with reference to said channel setting table (112) and sending the packet type and an address search instruction to said address search processing means (111), and
packet sending means (115) for sending packets according to the packet sending instruction from said address search processing means (111),
said address search processing means (111) comprising
header extracting means (210) for extracting a search key of address information from the header information of the packet,
a plurality of search means (211-214) for searching the address information, for every packet type, according to the type of the packet and the extracted search key, and
header converting means (215) for rewriting the header information of the packet according to the address information searched by said search means (211-214).

5. A routing address search system as set forth in Claim 1, wherein
said address search processing means (111) comprising
header extracting means (310) for extracting header information from the packet,
packet type judging means (315) for judging the packet type from the extracted header information of the packet and extracting a search key of the address information,
a plurality of search means (211-214) for searching the address information, for every packet type, according to the type of the packet and the extracted search key, and
header converting means (215) for rewriting the header information of the packet according to the address information searched by said search means (211-214).

6. A routing address search system as set forth in Claim 1, further comprising
a frame buffer (114) for storing packets,
a channel setting table (112) for setting storing address on said frame buffer (114) in which packets are stored, for every channel of the packets,
packet receiving means (113) for storing each received packet into each storing address of said frame buffer (114) with reference to said channel setting table and sending an address search instruction to said address search processing means (111), and
packet sending means (115) for sending packets according to the packet sending instruction from said address search processing means (111).

7. A routing address search system as set forth in Claim 1, further comprising
a frame buffer (114) for storing packets,
a channel setting table (112) for setting storing address on said frame buffer (114) in which packets are stored, for every channel of the packets,
packet receiving means (113) for storing each received packet into each storing address of said frame buffer (114) with reference to said channel setting table (112) and sending an address search instruction to said address search processing means (111), and
packet sending means (115) for sending packets according to the packet sending instruction from said address search processing means (111),
said address search processing means (111) comprising
header extracting means (310) for extracting header information from the packet,
packet type judging means (315) for judging the packet type from the extracted header information of the packet and extracting a search key of the address information,
a plurality of search means (211-214) for searching the address information, for every packet type, according to the type of the packet and the extracted search key, and
header converting means (215) for rewriting the header information of the packet according to the address information searched by said search means (211-214).

8. A routing address search system as set forth in Claim 1, wherein
said address search processing means (111) is realized by hardware.

9. A routing address search system as set forth in Claim 1, wherein
said address information storing means (110) is realized by a plurality of memories for storing the tables.

10. A routing address search system for finding destination address in routing processing, comprising:
an address information storing circuit (110) provided with a plurality of tables in which each address information is stored for every type of received packets; and
an address search processing circuit (111) for searching the corresponding table of said address information storing circuit (110), according to the type of a packet and a search key extracted from header information of the packet, rewriting the header information of the packet according to the searched address information, and thereafter giving an instruction of sending the packet.

11. A routing address search system as set forth in Claim 10, wherein
said address search processing circuit (111) comprising
a header extracting circuit (210) for extracting a search key of address information from the header information of the packet,
a plurality of search circuits (211-214) for searching the address information, for every packet type, according to the type of the packet and the extracted search key, and
a header converting circuit (215) for rewriting the header information of the packet according to the address information searched by said search circuit (211-214).

12. A routing address search system as set forth in Claim 10, further comprising
a frame buffer (114) for storing packets,
a channel setting table (112) for setting storing address on said frame buffer (114) in which each packet and each packet type are stored, for every channel of the packets,
a packet receiving circuit (113) for storing each received packet into each storing address of said frame buffer (114) with reference to said channel setting table (112) and sending the packet type and an address search instruction to said address search processing circuit (111), and
a packet sending circuit (115) for sending packets according to the packet sending instruction from said address search processing circuit (111).

13. A routing address search system as set forth in Claim 10, wherein
said address search processing circuit (111) comprising
a header extracting circuit (310) for extracting header information from the packet,
a packet type judging circuit (315) for judging the packet type from the extracted header information of the packet and extracting a search key of the address information,
a plurality of search circuits (211-214) for searching the address information, for every packet type, according to the type of the packet and the extracted search key, and
a header converting circuit (215) for rewriting the header information of the packet according to the address information searched by said search circuit (211-214).

14. A routing address search system as set forth in Claim 10, further comprising
a frame buffer (114) for storing packets,
a channel setting table (112) for setting storing address on said frame buffer (114) in which packets are stored, for every channel of the packets,
a packet receiving circuit (113) for storing each received packet into each storing address of said frame buffer (114) with reference to said channel setting table and sending an address search instruction to said address search processing circuit (111), and
a packet sending circuit (115) for sending packets according to the packet sending instruction from said address search processing circuit (111).

15. A routing address search system as set forth in Claim 10, wherein
said address information storing circuit (110) is realized by a plurality of memories storing the tables.
